# EUROPÄISCHE PATENTANMELDUNG

(11) **EP 4 694 090 A1**
(43) Veröffentlichungstag der Anmeldung: **11.02.2026**
(21) Anmeldenummer: 24193394.4
(22) Anmeldetag: 07.08.2024
(51) Int. Cl.: H04L 67/125

(54) **VERFAHREN ZUR ERWEITERUNG EINER AUF EINER PUNKT-ZU-PUNKT KOMMUNIKATION BASIERENDEN KOMMUNIKATIONSTECHNOLOGIE**

(71) Anmelder: Murrelektronik GmbH, 71570 Oppenweiler (DE)
(72) Erfinder: Setzer, Timo, 74535 Mainhardt (DE); Witte, Franz-Otto, 79106 Freiburg im Breisgau (DE)
(74) Vertreter: Bösherz Goebel Patentanwälte

(57) **Zusammenfassung**

Die Erfindung betrifft ein Verfahren (100) zur Erweiterung einer auf einer Punkt-zu-Punkt Kommunikation basierenden Kommunikationstechnologie zum Betreiben einer Kette von sekundären Geräten (300) an einem gemeinsamen Anschluss (210) eines Mastergeräts (200), wobei vorzugsweise die sekundären Geräte (300) als IO-Link Devices, das Mastergerät (200) als IO-Link Master und/oder die Kommunikationstechnologie als IO-Link ausgeführt ist, wobei das Verfahren (100) umfasst:
- Bereitstellen (101) von Daten (500) zur Verarbeitung durch ein aktuell ausführendes Gerät (301) in der Kette, wobei ein Datenblock (510) der Daten (500) mehrere Datenelemente (520) umfasst, die den verschiedenen Geräten (300) in der Kette zugeordnet sind,
- Bereitstellen (102) wenigstens eines Datenelements (530) der Datenelemente (520), welches an einer vorgegebenen Position im Datenblock (510) vorgesehen ist, und daher dem aktuell ausführenden Gerät (301) in der Kette zugeordnet wird,
- Durchführen (103) der Verarbeitung der Daten (500), wobei eine Verschiebung, insbesondere Rotation, der Datenelemente (520) um eine spezifizierte Anzahl von Positionen durchgeführt wird, damit nach jeder Weiterleitung der Daten (500) an eines der Geräte (300) in der Kette diesem Gerät (300) das ihm zugeordnete wenigstens eine Datenelement (530) an der gleichen vorgegebenen Position bereitgestellt wird,
- Initiieren (104) der Weiterleitung der Daten (500) an das dem aktuell ausführenden Gerät (301) nachfolgende Gerät (300).

## Beschreibung

Die vorliegende Erfindung betrifft ein Verfahren zur Erweiterung einer auf einer Punkt-zu-Punkt Kommunikation basierenden Kommunikationstechnologie. Ferner bezieht sich die Erfindung auf ein Mastergerät, ein sekundäres Gerät, ein Kommunikationssystem, ein Computerprogramm sowie eine Vorrichtung zu diesem Zweck.

### Stand der Technik

Es ist aus dem Stand der Technik bekannt, dass verschiedene Kommunikationstechnologien in einem Kommunikationssystem für eine industrielle Anlage zum Einsatz kommen können.

Neben einem Feldbussystem finden dabei in der Regel auch untergeordnete Kommunikationstechnologien Verwendung, z. B. zur Verbindung für die Sensor-/Aktor-Ebene. IO-Link ist eine standardisierte Kommunikationsschnittstelle für einen solchen Zweck, die eine Punkt-zu-Punkt-Verbindung zwischen einem IO-Link Master und einem IO-Link Device ermöglicht.

IO-Link ist eine Punkt-zu-Punkt-Kommunikationstechnologie, was bedeutet, dass jedes IO-Link-Device direkt mit einem IO-Link Master verbunden ist. Die Punkt-zu-Punkt-Verbindung ist besonders vorteilhaft für die Anbindung von Geräten wie Sensoren und Aktoren zum Datenaustausch und zur Steuerung. Diese Geräte bilden üblicherweise einen Endpunkt. Eine Kaskadierung von IO-Link-Devices ist daher üblicherweise weder vorgesehen noch notwendig.

Nachteilig sind die üblichen Konfigurationen als Punkt-zu-Punkt Verbindung allerdings, wenn eine Kaskade von IO-Link-Devices funktional sinnvoll oder notwendig ist. In diesem Falle ist die herkömmliche IO-Link-Funktionalität nicht unmittelbar einsetzbar.

Es sind vereinzelt Lösungen bekannt, bei welchen ein Erweiterungsport genutzt wird, um das IO-Link-Device mit einem weiteren Gerät zu verbinden. Dieser erfordert allerdings eine aufwendigere Konfiguration und ist auf ein anzuschließendes Gerät begrenzt.

Ferner sind Lösungen bekannt, bei welchen eine drahtlose Verbindung zum Einsatz kommt. Diese übertragen aber lediglich die kabelgebundene Punkt-zu-Punkt-Verbindung auf eine Funktechnologie, bieten zwar eine größere Flexibilität, aber auch technische Nachteile wie einen höheren Aufwand und je nach Umgebungsbedingungen auch Fehleranfälligkeit.

Darüber hinaus sind Lösungen verfügbar, die auf die Verwendung eines IO-Link Hubs basieren. Solche Lösungen führen aber nicht zu einer Kaskade von IO-Link-Geräten und haben daher einen anderen Einsatzzweck.

Herkömmliche Lösungen für eine Erweiterung der IO-Link Technologie sind u.a. aus den Schriften CN110266569A, EP3944565A1, DE102016223024A1 und CN117395099A bekannt.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Möglichkeit zur Erweiterung einer auf einer Punkt-zu-Punkt Kommunikation bereitzustellen.

### Offenbarung der Erfindung

Gegenstand der Erfindung ist ein Verfahren mit den Merkmalen des Anspruchs 1, ein weiteres Verfahren mit den Merkmalen des Anspruchs 9, ein Mastergerät mit den Merkmalen des Anspruchs 10, ein sekundäres Gerät mit den Merkmalen des Anspruchs 11, ein Kommunikationssystem mit den Merkmalen des Anspruchs 13, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen weiteren Verfahren, dem erfindungsgemäßen Mastergerät, dem erfindungsgemäßen sekundären Gerät, dem erfindungsgemäßen Kommunikationssystem, dem erfindungsgemäßen Computerprogramm sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist insbesondere ein Verfahren, insbesondere für eine industrielle Anlage, zur Erweiterung einer auf einer Punkt-zu-Punkt Kommunikation basierenden Kommunikationstechnologie wie IO-Link, vorzugsweise zum Betreiben einer Kette von sekundären Geräten, bevorzugt an einem gemeinsamen Anschluss eines Mastergeräts, insbesondere IO-Link Masters, vorzugsweise IO-Link-Mastermoduls.

Vorzugsweise können die sekundären Geräte als IO-Link Devices ausgebildet sein. Allgemeiner können die sekundären Geräte jeweils als ein (End-) Gerät für eine Punkt-zu-Punkt-Verbindung mit einem Mastergerät ausgebildet sein. Mindestens eines oder mindestens zwei oder mindestens drei der sekundären Geräte kann/können jeweils einen Erweiterungsport für eine Kaskade mit wenigstens einem oder wenigstens zwei oder wenigstens drei weiteren sekundären Gerät(en) aufweisen. Die Kette/Kaskade kann insgesamt z. B. mindestens zwei oder mindestens drei oder mindestens vier oder sogar mehr sekundäre Geräte umfassen. Dabei kann lediglich eines der sekundären Geräte, insbesondere ein erstes sekundäres Gerät, in der Kette/Kaskade eine direkte (Punkt-zu-Punkt) Verbindung mit dem Mastergerät aufweisen. Das Mastergerät kann dabei mit den übrigen sekundären Geräten, welche keine direkte Verbindung aufweisen, indirekt über das erste sekundäre Gerät in der Kette kommunizieren. Die hierzu vorgesehene Verarbeitung der Daten zur Kommunikation wird nachfolgend noch näher beschrieben.

Das Mastergerät kann als ein primäres Gerät und insbesondere als ein IO-Link Master für die Kommunikationstechnologie fungieren. Die Kommunikationstechnologie kann daher als IO-Link ausgeführt sein. Das Mastergerät kann als ein Mastermodul ausgebildet sein, welches weitere Anschlüsse aufweist, welche zur Verbindung mit weiteren sekundären Geräten oder anderen IO-Link Devices dienen. Weiter kann das Mastergerät und insbesondere Mastermodul auch einen Anschluss für ein Feldbussystem aufweisen.

Die Verfahrensschritte eines (ersten) erfindungsgemäßen Verfahrens und/oder eines weiteren (zweiten) erfindungsgemäßen Verfahrens können zumindest teilweise von einem oder jedem der sekundären Geräte in der Kette und/oder durch das Mastergerät ausgeführt werden. Vorzugsweise das erste erfindungsgemäße Verfahren kann dabei von den sekundären Geräten und das weitere (zweite) Verfahren von dem Mastergerät ausgeführt werden.

Das erfindungsgemäße Verfahren kann zunächst ein Bereitstellen von Daten zur Verarbeitung durch ein aktuell ausführendes Gerät in der Kette umfassen. Das aktuell ausführende Gerät in der Kette kann vorzugsweise jedes der sekundären Geräte in der Kette sein, welche gerade die Daten verarbeitet und/oder empfängt und/oder aussendet. Darüber hinaus kann das aktuell ausführende Gerät das erste sekundäre Gerät in der Kette sein, welches direkt, d. h. insbesondere auch elektrisch und/oder mechanisch unmittelbar, mit dem gemeinsamen Anschluss des Mastergeräts verbunden ist. Die weiteren sekundären Geräte in der Kette können hingegen indirekt über das erste sekundäre Gerät mit dem gemeinsamen Anschluss des Mastergeräts verbunden sein.

Ferner kann ein Datenblock der Daten mehrere Datenelemente umfassen, die den verschiedenen Geräten in der Kette zugeordnet sind. Somit sind nicht alle Datenelemente des Datenblocks, welcher aktuell durch das erste sekundäre Gerät verarbeitet wird, auch für das erste sekundäre Gerät vorgesehen.

Das Verfahren kann ferner ein Bereitstellen wenigstens eines Datenelements der Datenelemente umfassen. Das bereitgestellte wenigstens eine Datenelement ist dabei an einer vorgegebenen Position im Datenblock vorgesehen. Daher kann es dem aktuell ausführenden Gerät in der Kette zugeordnet werden. Die vorgegebene Position kann z. B. immer die erste Position im Datenblock sein. Die vorgegebene Position kann für alle der sekundären Geräte in der Kette gleich definiert sein.

Das Verfahren kann außerdem umfassen: Durchführen der Verarbeitung der Daten, wobei ggf. eine Verschiebung, insbesondere Rotation, der Datenelemente um eine spezifizierte Anzahl von Positionen durchgeführt werden kann, damit vorzugsweise nach jeder Weiterleitung der Daten an eines der sekundären Geräte in der Kette diesem Gerät das ihm zugeordnete wenigstens eine Datenelement an der gleichen vorgegebenen Position bereitgestellt wird. Damit wird erreicht, dass die vorgegebene Position für alle der sekundären Geräte in der Kette gleich definiert sein.

Ferner kann ein Initiieren der Weiterleitung der Daten an das dem aktuell ausführenden Gerät nachfolgende Gerät vorgesehen sein. Jedem der sekundären Geräte in der Kette ist vorzugsweise nur ein Gerät nachfolgend, da es sich bevorzugt um eine Verkettung im Sinne einer Daisy Chain handeln kann.

Das Verfahren hat den Vorteil, dass die Erweiterung und/oder der Abruf des zugeordneten wenigstens einen Datenelements durch ein sekundäres Gerät im Wesentlichen geräteunabhängig erfolgen kann, und somit der Konfigurationsaufwand auf ein Minimum begrenzt wird.

Es wird ebenfalls erreicht, dass ein flexibler Aufbau von Systemkonfigurationen möglich ist, da die Geräte in einem beliebigen Positionsverhältnis innerhalb der Kette unabhängig voneinander ihre Funktionen ausführen können. Durch die Verschiebung der Datenelemente innerhalb des Datenblocks wird sichergestellt, dass jedes Gerät in der Kette an seiner spezifischen Position genau die für ihn relevanten Daten erhält. Dadurch vereinfacht sich die Konfiguration und Verwaltung, da für die Geräte keine Kenntnis ihres Positionsverhältnisses in der Kette erforderlich ist.

Die Anpassungsfähigkeit des Systems ermöglicht es ferner, mit wenig Aufwand neue Geräte hinzuzufügen, indem die Datenzuordnung durch Rotation dynamisch angepasst wird.

Vorteilhaft ist es darüber hinaus, wenn im Rahmen der Erfindung die Verschiebung, insbesondere Rotation, zur einheitlichen Durchführung durch jedes der Geräte, vorzugsweise mit einer variablen und für die Geräte spezifizierbaren Anzahl der Positionen, vorgesehen ist. Dies kann es ermöglichen, dass die Verschiebung, insbesondere Rotation, der Datenelemente von jedem der Geräte in der Kette durchgeführt werden kann, bevor das jeweilige Gerät die Weiterleitung initiiert. Auf diese Weise kann gewährleistet sein, dass das jeweils aktuell ausführende Gerät, welches aktuell die Verarbeitung der Daten ausführt, das ihm zugeordnete wenigstens eine Datenelement stets an der gleichen vorgegebenen Position abrufen kann. Dies vereinfacht den Konfigurationsaufwand für die Geräte enorm. Im Wesentlichen können dabei baugleiche sekundäre Geräte ohne oder nur mit minimalen Konfigurationsaufwand zur Erweiterung der Kette verwendet werden.

Weiter kann die für die Verschiebung vorgesehene Anzahl der Positionen spezifiziert werden in Abhängigkeit von der Anzahl der Datenelemente, die dem jeweiligen aktuell ausführenden Gerät zugeordnet sind und durch das Gerät verarbeitet werden. Daher kann die Anzahl der Positionen für die Verschiebung je nach Anzahl der Datenelemente angepasst werden, die dem jeweiligen Gerät zugewiesen sind. Dies ermöglicht jedem Gerät in der Kette, seine Datenelemente korrekt zu verarbeiten. Die Anzahl der Datenelemente, die einem sekundären Gerät in der Kette zugewiesen sind, müssen dank der Verschiebung den anderen Geräten in der Kette nicht bekannt sein.

Vorzugsweise kann das Verfahren zur wiederholten Ausführung vorgesehen sein, und zwar nacheinander von den verschiedenen Geräten in der Kette. Die wiederholte Ausführung des Verfahrens durch jedes Gerät in der Kette sichert eine reibungslose Datenweiterleitung und - verarbeitung im gesamten System.

Zudem ist im Rahmen der Erfindung denkbar, dass die Durchführung der Verarbeitung der Daten unterschiedliche Typen von Verarbeitungsvorgängen, vorzugsweise einen Empfangs- und Sendevorgang, bevorzugt Lese- und Schreibvorgang, am wenigstens einen zugeordneten Datenelement umfasst.

Weiter ist möglich, dass die Durchführung der Verarbeitung der Daten umfasst: Durchführen der Verschiebung, insbesondere Rotation, der Datenelemente in eine Richtung, die abhängig von dem Typ des aktuellen Verarbeitungsvorgangs ist, vorzugsweise in eine erste Richtung, wenn es sich um einen Empfangs- oder Lesevorgang handelt, und in eine zur ersten Richtung entgegengesetzten Richtung, wenn es sich um einen Sende- oder Schreibvorgang handelt. Die Richtung der Verschiebung, also Rotation, ändert sich somit je nach Art des aktuellen Verarbeitungsvorgangs. Dabei können bevorzugt die Richtungen links- und rechtsseitig und/oder die Verschiebung zyklisch sein. Diese zyklische Bewegung der Datenelemente ermöglicht eine effiziente Datenverarbeitung und -übertragung in der Kette.

Auch ist es optional denkbar, dass der Datenblock ein Array - mit den mehreren Datenelementen als Arrayelemente - bildet. Weiter kann das Bereitstellen des wenigstens einen zugeordneten Datenelements für jedes der Geräte an der gleichen vorgegebenen Position im Array erfolgen, sodass die Geräte den Abruf ihres wenigstens einen zugeordneten Datenelements unabhängig von ihrer Position in der Kette vornehmen können und/oder agnostisch hinsichtlich ihrer Position in der Kette sind. Dadurch kann jedes Gerät im Array unabhängig von seiner Position innerhalb des Ketten-Systems auf sein spezifisches Datenelement zugreifen. Dieses Vorgehen vereinfacht die Implementierung, da jedes Gerät nur das Element abrufen muss, dem es zugeordnet ist, ohne Rücksicht auf seine Position in der Kette.

Vorzugsweise kann vorgesehen sein, dass jedes der Geräte eine Konfiguration aufweist, welche die Anzahl der Datenelemente bestimmt, welche dem Gerät zugeordnet sind und verarbeitet werden. Weiter kann die Anzahl der zugeordneten Datenelemente abhängig sein von der Anzahl der Steuerungsfunktionen und/oder Erfassungsfunktionen, die das Gerät bereitstellt, und welche vorzugsweise durch die zugeordneten Datenelemente konfiguriert und/oder eingestellt und/oder angesteuert und/oder ausgelesen werden, bevorzugt über das Mastergerät und besonders bevorzugt über eine zentrale oder dezentrale Steuerung (Steuerungsvorrichtung) einer industriellen Anlage.

Weiter kann jedes der Geräte eine Funktion zur Spezifikation der Anzahl der Positionen aufweist, um die Verschiebung, insbesondere Rotation, um diejenige Anzahl von Positionen/Stellen durchzuführen, welche der Anzahl der zugeordneten und verarbeiteten Datenelemente entspricht. Mit anderen Worten, jedes Gerät in der Kette kann seine Konfiguration bereitstellen, um anzugeben, wie viele Datenelemente es verarbeitet. Diese Anzahl kann von der Funktion des Geräts abhängen. Jedes Gerät kann dabei außerdem die Positionen für die Rotation selbst festlegen, um sicherzustellen, dass die Datenelemente korrekt an ihre Position verschoben werden.

In einer weiteren Möglichkeit kann vorgesehen sein, dass die (sekundären) Geräte in der Kette zumindest eines der folgenden umfassen:
- Ein Gerät zur Bereitstellung von wenigstens einer Steuerungsfunktion, vorzugsweise zur Ansteuerung von wenigstens einem Motor und/oder wenigstens einer Leuchte und/oder von Segmentleuchten,
- Ein Gerät zur Bereitstellung von wenigstens einer Erfassungsfunktion, vorzugsweise zur Auswertung eines Sensors und/oder einer Lichtschranke und/oder eines Schalters,
- Ein Gerät zur Bereitstellung von Steuerungsfunktionen in der Form von Energiemanagementfunktionen, vorzugsweise zur Überwachung und Optimierung des Energieverbrauchs und/oder zur Steuerung von Energieeinsparmaßnahmen und/oder zur Integration in ein Energiemanagementsystem,
- Ein Gerät zur Bereitstellung von Steuerungsfunktionen in der Form von Temperaturregelungsfunktionen, vorzugsweise zur Erfassung und Regelung der Temperatur in industriellen Prozessen und/oder zur Überwachung von Temperaturgrenzwerten und/oder zur Steuerung von Heizelementen,
- Ein Gerät zur Bereitstellung von Steuerungsfunktionen in der Form von Positionier- und Bewegungserfassungsfunktionen, vorzugsweise zur Positionierung von Maschinenkomponenten und/oder zur Überwachung von Bewegungsabläufen und/oder zur Integration in ein Automatisierungssystem,
- Ein Gerät zur Bereitstellung von Erfassungsfunktionen in der Form von Kommunikationsfunktionen, vorzugsweise zur Anbindung und Integration von Feldgeräten in ein übergeordnetes Steuerungssystem und/oder zur Datenübertragung zwischen Maschinenkomponenten,
- Ein Gerät zur Bereitstellung von Erfassungsfunktionen in der Form von Diagnose- und Wartungsfunktionen, vorzugsweise zur Überwachung und Analyse des Gerätezustands und/oder zur Früherkennung von Fehlfunktionen und/oder zur Unterstützung bei der vorausschauenden Wartung,
- Ein Gerät zur Bereitstellung von Erfassungsfunktionen in der Form von Sicherheitsfunktionen, vorzugsweise zur Überwachung und Kontrolle von Sicherheitszonen und/oder zur Auslösung von Sicherheitsmaßnahmen,
- Ein Gerät zur Bereitstellung von Erfassungsfunktionen in der Form von optischen Erkennungsfunktionen, vorzugsweise zur Erfassung und Auswertung von Bilddaten und/oder zur Unterstützung von Qualitätskontrollprozessen und/oder zur Identifikation von Objekten und deren Merkmalen.

Auf diese Weise kann die Kette von Geräten eine Vielzahl von Funktionen erfüllen. Die Flexibilität der Kette ermöglicht es, Geräte mit spezifischen Funktionen an die jeweiligen Anforderungen anzupassen und so eine Vielzahl von Anwendungen zu realisieren.

Des Weiteren ist es denkbar, dass die Geräte der Kette in einer Daisy Chain Konfiguration miteinander kabelgebunden zum Datenaustausch und vorzugsweise Energieaustausch verbunden sind. Somit können die Geräte in der Kette über ein einfaches Kabel-Verbindungsnetzwerk miteinander verbunden sein. Dies kann den Installationsaufwand verringern und eine zuverlässigere Datenübertragung ermöglichen, da keine drahtlosen Verbindungen benötigt werden. Die Daisy Chain Konfiguration ermöglicht zudem einen effizienten Energieaustausch zwischen den Geräten, wodurch die Gesamtleistung des Systems verbessert wird.

Weiter ist es denkbar, dass eine Energieeinspeisung, insbesondere zusätzlich zur Energieversorgung durch das Mastergerät, für die Geräte durchgeführt wird. Dies bedeutet, dass eine zusätzliche Energie-Einkopplung durchgeführt werden kann, insbesondere zusätzlich zur Energieversorgung, die von dem Mastergerät bereitgestellt wird. Dies ist bevorzugt dadurch möglich, dass wenigstens ein Verbindungsstück, insbesondere T-Stück, zur Energieeinspeisung mit wenigstens einem der Geräte verbunden ist. Mit anderen Worten kann durch die Verbindungsstücke wie T-Stücke zwischen den kaskadierten Geräten eine Energie-Einkopplung erfolgen. Es kann sich dabei um eine Einspeisung von zusätzlicher Betriebsspannung in die Kette handeln. Dies ist insbesondere dann notwendig und sinnvoll, wenn die Energieversorgung durch das Mastergerät nicht ausreicht, um alle daran angeschlossenen Geräte zu versorgen. Das Verbindungs- und vorzugsweise T-Stück kann dabei eine zusätzliche externe Spannungsversorgung aufnehmen, die ggf. unabhängig vom Mastergerät, vorzugsweise IO-Link-Master, ist. Dies kann besonders zur Leistungserhöhung bei Leuchtenschaltungen in Reihe (Daisy chain) sinnvoll sein, also dann, wenn die Geräte der Kette zumindest teilweise als Leuchten ausgebildet sind.

IO-Link verwendet insbesondere eine Punkt-zu-Punkt Verbindung zwischen einem Master und einem Device, wobei der Master das Device mit Strom versorgt. Ein dritter Eingang, bereitgestellt durch ein Verbindungsstück, erlaubt das Zuschalten einer externen Spannungsversorgung. Zur Weiterschleifung von einer externen Spannungsversorgung kann bspw. eine M12 5-polige Buchse als Eingang verwendet werden. Das Verbindungsstück kann dabei dazu ausgeführt sein, zusätzlich zum Durchschleifen der Spannungsversorgung des Mastergeräts auch zusätzlich die externe Spannungsversorgung weiterzuleiten. Dies bedeutet, dass sowohl die Spannungsversorgung des Mastergeräts als auch die externe Spannungsversorgung von einem Eingang des Verbindungsstücks an Ausgänge des Verbindungstücks weitergeleitet werden. Die Ausgänge können einen Hauptausgang und einen Abzweig des Verbindungsstücks umfassen. Der Eingang kann bspw. ein oder zwei Pins für die Spannungsversorgung des Mastergeräts aufweisen, welche z. B. mit dem Hauptausgang elektrisch verbunden sind, und ein oder zwei zusätzliche Pins für die externe Spannungsversorgung aufweisen, welche z. B. mit dem Abzweig elektrisch verbunden sind.

In einer weiteren Möglichkeit kann vorgesehen sein, dass die Daten eine erste Datenart umfassen, bei welcher die Datenelemente als Steuerungs-, Konfigurations-, Diagnose- und/oder Kalibrierungsdaten vorgesehen sind, und eine zweite Datenart umfassen, bei welcher die Datenelemente als Prozessdaten ausgeführt sind. Dies ermöglicht eine effizientere Verarbeitung und Organisation der Daten.

Ebenfalls Gegenstand der Erfindung ist ein weiteres (zweites) Verfahren, insbesondere für eine industrielle Anlage, welches vorzugsweise durch ein, insbesondere erfindungsgemäßes, Mastergerät ausgeführt wird. Das Verfahren dient insbesondere zur Erweiterung einer auf einer Punkt-zu-Punkt Kommunikation basierenden Kommunikationstechnologie zum Betreiben von mindestens zwei über eine kabelgebundene Verbindung miteinander verkettete sekundäre Geräte an einem gemeinsamen Anschluss eines/des Mastergeräts.

Das weitere Verfahren kann umfassen:
- Bereitstellen von Daten zur Verarbeitung durch sämtliche der (sekundären) Geräte in der Kette, wobei vorzugsweise ein Datenblock der Daten zur Aufnahme und Kombination mehrerer Datenelemente ausgeführt ist, die bevorzugt den verschiedenen Geräten in der Kette zugeordnet werden,
- Bereitstellen wenigstens eines ersten Datenelements der Datenelemente an einer vorgegebenen Position im Datenblock, um vorzugsweise dieses einem ersten (sekundären) Gerät in der Kette zuzuordnen,
- Bereitstellen wenigstens eines weiteren Datenelements sequentiell nach dem wenigstens einen ersten Datenelement, um das wenigstens eine weitere Datenelement wenigstens einem weiteren Gerät in der Kette zuzuordnen,
- Initiieren einer Weiterleitung der Daten, bei welcher die Daten über den gemeinsamen Anschluss des Mastergeräts zur Verarbeitung durch jedes Gerät in der Kette ausgegeben werden.

Damit bringt das erfindungsgemäße weitere Verfahren die gleichen Vorteile mit sich, wie sie bereits zuvor für ein erstes erfindungsgemäßes Verfahren beschrieben worden sind.

Ferner kann im Rahmen der Erfindung vorgesehen sein, dass die sekundären Geräte als IO-Link Devices und/oder das Mastergerät als IO-Link Master und/oder die Kommunikationstechnologie als IO-Link ausgeführt ist.

Ebenfalls Gegenstand der Erfindung ist ein Mastergerät, insbesondere für eine industrielle Anlage, zur Erweiterung einer auf einer Punkt-zu-Punkt Kommunikation basierenden Kommunikationstechnologie zum Betreiben einer Kette von sekundären Geräten an einem gemeinsamen Anschluss des Mastergeräts. Dabei kann eine Vorrichtung zur Datenverarbeitung vorgesehen sein, welche dazu ausgeführt ist, das erfindungsgemäße weitere/zweite Verfahren auszuführen. Damit bringt das erfindungsgemäße Mastergerät die gleichen Vorteile mit sich, wie sie ausführlich mit Bezug auf ein erfindungsgemäßes Verfahren beschrieben worden sind.

Ebenfalls Gegenstand der Erfindung ist ein sekundäres Gerät, insbesondere für eine industrielle Anlage, zur Verkettung mit wenigstens einem oder mehreren weiteren sekundären Geräten in einem auf einer Punkt-zu-Punkt Kommunikation basierenden Kommunikationssystem. Das sekundäre Geräte kann dabei einen Datenanschluss zum Empfangen von Daten zur Verarbeitung durch das sekundäre Gerät aufweisen. Dabei kann, wie bereits zuvor beschrieben, ein Datenblock der Daten mehrere Datenelemente umfasst, die den Geräten in der Kette zugeordnet sind.

Weiter kann ein Datenspeicher des erfindungsgemäßen sekundären Geräts zum Bereitstellen wenigstens eines Datenelements der Datenelemente vorgesehen sein. Das bereitgestellte wenigstens eine Datenelement kann dabei an einer vorgegebenen Position im Datenblock vorgesehen sein, und daher dem sekundären Gerät zugeordnet werden.

Ferner kann das erfindungsgemäße sekundäre Gerät ein Mittel zum Durchführen der Verarbeitung der Daten aufweisen. Hierbei kann eine Verschiebung, insbesondere Rotation, der Datenelemente um eine spezifizierte Anzahl von Positionen durchgeführt werden, damit nach jeder Weiterleitung der Daten an eines der Geräte in der Kette diesem Gerät das ihm zugeordnete wenigstens eine Datenelement ebenfalls an der gleichen vorgegebenen Position bereitgestellt wird.

Außerdem ist es möglich, dass das erfindungsgemäße sekundäre Gerät einen Erweiterungsanschluss für die Weiterleitung durch ein Ausgeben der Daten über den Erweiterungsanschluss an ein nachfolgendes Gerät aufweist.

Das erfindungsgemäße sekundäre Gerät bringt die gleichen Vorteile mit sich, wie sie ausführlich mit Bezug auf ein erfindungsgemäßes Verfahren beschrieben worden sind. Zudem kann das erfindungsgemäße sekundäre Gerät geeignet sein, ein erfindungsgemäßes Verfahren auszuführen. Optional ist es denkbar, dass das sekundäre Gerät hierzu eine Vorrichtung zur Datenverarbeitung aufweist, die ausgeführt ist, das erfindungsgemäße (erste) Verfahren auszuführen.

Ebenfalls Gegenstand der Erfindung ist ein Kommunikationssystem, insbesondere für eine industrielle Anlage, aufweisend ein erfindungsgemäßes Mastergerät sowie mindestens ein oder mindestens zwei erfindungsgemäße sekundäre Geräte, wobei vorzugsweise die sekundären Geräte miteinander kabelgebunden verkettet sind, und wobei bevorzugt lediglich eines der sekundären Geräte über einen gemeinsamen Anschluss des Mastergeräts die Kette mit dem Mastergerät verbindet. Damit bringt das erfindungsgemäße Kommunikationssystem die gleichen Vorteile mit sich, wie sie ausführlich mit Bezug auf eines der erfindungsgemäßen Verfahren beschrieben worden sind. Zudem kann das Kommunikationssystem geeignet sein, zumindest eines der erfindungsgemäßen Verfahren auszuführen.

Das Kommunikationssystem kann als ein IO-Link System ausgeführt sein. Dieses kann das Mastergerät in der Form eines IO-Link Masters und die sekundären Geräte in der Kette sowie ggf. weitere Geräte jeweils in der Form von IO-Link Devices aufweisen. Die IO-Link-Devices können dabei auch Sensoren und Aktoren umfassen. Ferner können die IO-Link-Devices optional auch RFID- oder NFC-Reader, Ventile, Motorstarter oder IO-Module umfassen.

Das Mastergerät stellt vorzugsweise die Verbindung zwischen den Geräten, insbesondere IO-Link Devices, und dem Automatisierungssystem her. Als Bestandteil eines Peripheriesystems kann das Mastergerät bspw. im Schaltschrank oder als Remote-I/O, bspw. in Schutzart IP65/67, direkt im Feld installiert sein. Das Mastergerät ist vorzugsweise dazu ausgeführt, zur Integration in das Automatisierungssystem über ein oder verschiedene Feldbusse oder produktspezifische Rückwandbusse mit einer Steuerungsvorrichtung oder anderen Komponenten des Automatisierungssystems zu kommunizieren. Die Kommunikation des Mastergeräts mit den sekundären Geräten basiert allerdings auf einer Punkt-zu-Punkt Kommunikation. Ein Mastergerät kann hierzu mehrere Anschlüsse, vorzugsweise IO-Link Ports (Kanäle), aufweisen. An jedem Anschluss kann ein sekundäres Gerät, insbesondere IO-Link Device, anschließbar sein (Punkt-zu-Punkt-Kommunikation). Somit ist die bereitgestellte Kommunikationstechnologie, konkret IO-Link, eine Punkt-zu-Punkt-Kommunikation und kein Feldbus. Punkt-zu-Punkt-Kommunikation bezieht sich somit insbesondere darauf, dass die Kommunikationstechnologie dafür ausgelegt ist, dass sekundäre Geräte jeweils an einem eigenen Anschluss des Mastergeräts zur Kommunikation angeschlossen werden. Erfindungsgemäß kann hier eine Erweiterung in dem Sinne vorgesehen sein, dass nicht nur ein einziges sekundäres Gerät an einem Anschluss des Mastergeräts, sondern gleich mehrere sekundäre Geräte an einem gemeinsamen Anschluss des Mastergeräts angeschlossen werden können.

Ebenfalls Gegenstand der Erfindung ist eine Vorrichtung zur Datenverarbeitung, umfassend Mittel zur Ausführung der Schritte wenigstens eines der erfindungsgemäßen Verfahren. Damit bringt die erfindungsgemäße Vorrichtung zur Datenverarbeitung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, wenigstens eines der erfindungsgemäßen Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind. Das Computerprogramm kann ferner zumindest teilweise nicht-flüchtig und/oder als Software zum Download und/oder als Cloud-Service und/oder als ausführbares Programm und/oder als Konfigurationsdatei und/oder als Programmbibliothek und/oder als Quelltext und/oder in kompilierter und/oder verschlüsselter und/oder komprimierter Form und/oder in einer Kombination davon vorliegen.

Als der Computer kann eine Datenverarbeitungsvorrichtung, vorzugsweise die erfindungsgemäße Vorrichtung zur Datenverarbeitung, vorgesehen sein.

Die erfindungsgemäße Vorrichtung zur Datenverarbeitung und vorzugsweise der Computer kann dazu ausgebildet sein, das erfindungsgemäße Computerprogramm auszuführen. Hierzu kann die erfindungsgemäße Vorrichtung zur Datenverarbeitung wenigstens einen Prozessor aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass die erfindungsgemäße Vorrichtung zur Datenverarbeitung zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Die erfindungsgemäße Vorrichtung zur Datenverarbeitung bzw. der Computer kann somit auch als eine elektronische Schaltung ausgebildet sein. Die erfindungsgemäße Vorrichtung zur Datenverarbeitung kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie bspw. zur Bluetooth- oder Nahfeldkommunikation (NFC) aufweisen. Ferner kann die erfindungsgemäße Vorrichtung zur Datenverarbeitung als ein oder mehrere Steuergeräte, d. h. auch als ein System aus Steuergeräten, ausgeführt sein. Die erfindungsgemäße Vorrichtung zur Datenverarbeitung kann vollständig oder teilweise auch in einer Cloud und/oder als ein Server vorgesehen sein, um über die Schnittstelle die Datenverarbeitung für eine lokale Anwendung zur Verfügung zu stellen. Entsprechend kann die erfindungsgemäße Vorrichtung zur Datenverarbeitung auch als ein verteiltes System ausgebildet sein. Auch ist es möglich, dass die erfindungsgemäße Vorrichtung zur Datenverarbeitung als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer und/oder in die erfindungsgemäße Vorrichtung zur Datenverarbeitung integriert sein.

Darüber hinaus kann das jeweilige erfindungsgemäße Verfahren auch als ein computerimplementiertes Verfahren ausgeführt sein. Alternativ oder zusätzlich können jeder einzelne oder sämtliche der offenbarten Verfahrensschritte optional computer-implementiert sein und/oder automatisiert durchgeführt werden.

Ferner kann das jeweilige erfindungsgemäße Verfahren zur Bereitstellung und/oder Erweiterung einer Kommunikation bei einer industriellen Anlage, vorzugsweise zur Bereitstellung und/oder Erweiterung der Kommunikation mit den sekundären Geräten der industriellen Anlage vorgesehen sein. Die industrielle Anlage ist z. B. eine Automatisierungsanlage und/oder elektrische und/oder pneumatische und/oder fluidtechnische und/oder hydraulische Anlage.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines jeweiligen Verfahrens nach Ausführungsvarianten der Erfindung.
- Fig. 2: eine schematische Darstellung eines Kommunikationssystems nach Ausführungsvarianten der Erfindung.
- Fig. 3: eine weitere Veranschaulichung von Einzelheiten eines Verfahrens nach Ausführungsvarianten der Erfindung.
- Fig. 4: eine weitere Veranschaulichung von Einzelheiten eines Verfahrens nach Ausführungsvarianten der Erfindung.

In den nachfolgenden Figuren werden für die gleichen technischen Merkmale auch von unterschiedlichen Ausführungsbeispielen die identischen Bezugszeichen verwendet.

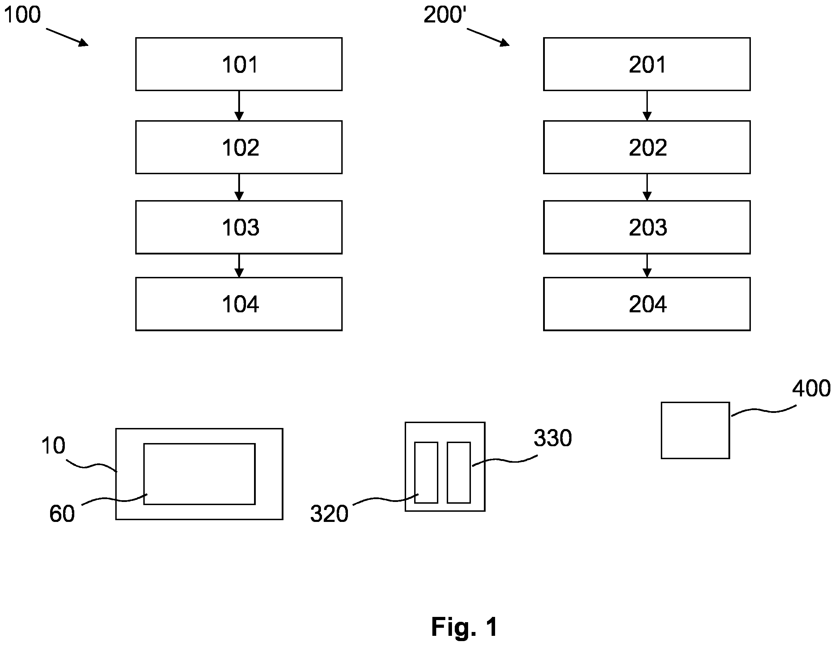

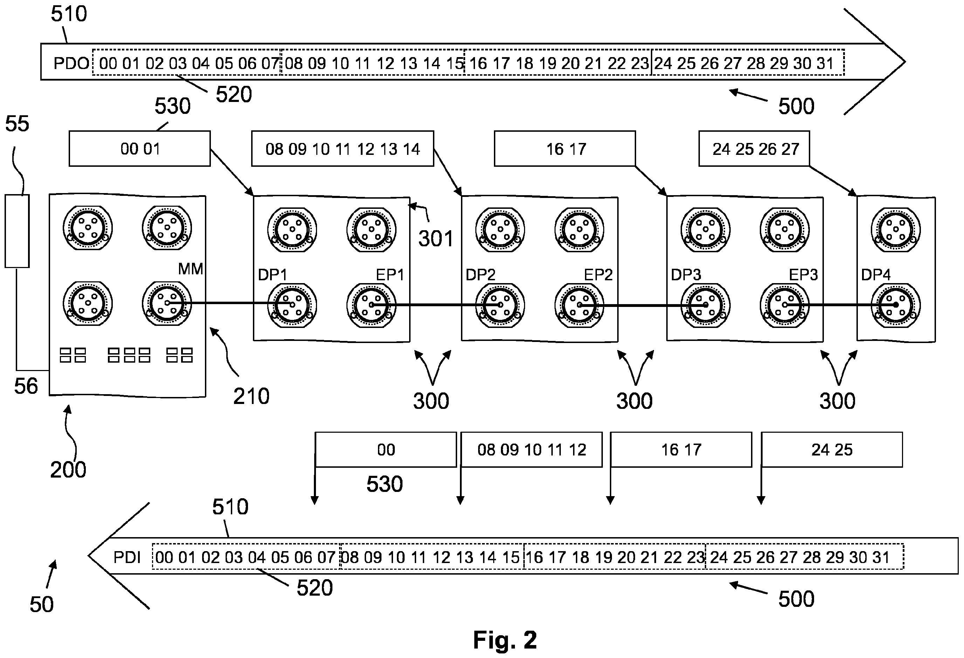

Fig. 1 und 2 veranschaulichen gemäß Ausführungsbeispielen der Erfindung ein erstes und zweites Verfahren 100, 200` zur Erweiterung einer auf einer Punkt-zu-Punkt Kommunikation basierenden Kommunikationstechnologie zum Betreiben einer Kette von sekundären Geräten 300 an einem gemeinsamen Anschluss 210 eines Mastergeräts 200. Ferner sind ein Mastergerät 200, ein sekundäres Gerät 300, ein Kommunikationssystem 50, ein Computerprogramm 60 sowie eine Vorrichtung 10 zur Datenverarbeitung zu diesem Zweck, jeweils nach Ausführungsvarianten der Erfindung, dargestellt. Es ist ferner beispielhaft ein Verbindungsstück 400 dargestellt.

Gemäß einem in Fig. 1 dargestellten ersten Verfahrensschritt 101 erfolgt ein Bereitstellen von Daten 500 zur Verarbeitung durch ein aktuell ausführendes Gerät 301 in der Kette, wobei ein Datenblock 510 der Daten 500 mehrere Datenelemente 520 umfasst, die den verschiedenen Geräten 300 in der Kette zugeordnet sind. Gemäß einem zweiten Verfahrensschritt 102 erfolgt ein Bereitstellen wenigstens eines Datenelements 530 der Datenelemente 520, welches an einer vorgegebenen Position im Datenblock 510 vorgesehen ist, und daher dem aktuell ausführenden Gerät 301 in der Kette zugeordnet wird. Sodann kann gemäß einem dritten Verfahrensschritt 103 eine Verarbeitung der Daten 500 durchgeführt werden. Dabei kann eine Verschiebung, insbesondere Rotation, der Datenelemente 520 um eine spezifizierte Anzahl von Positionen durchgeführt werden, damit nach jeder Weiterleitung der Daten 500 an eines der Geräte 300 in der Kette diesem Gerät 300 das ihm zugeordnete wenigstens eine Datenelement 530 an der gleichen vorgegebenen Position bereitgestellt wird. Sodann kann gemäß einem vierten Verfahrensschritt 104 ein Initiieren 104 der Weiterleitung der Daten 500 an das dem aktuell ausführenden Gerät 301 nachfolgende Gerät 300 vorgesehen sein.

Das erste Verfahren 100 beschreibt insbesondere ein Empfangen und Weiterleiten der Daten 500. Das initiale Senden der Daten 500 kann durch ein weiteres Verfahren 200' vorgesehen sein.

Das zweite Verfahren 200` kann bevorzugt durch das Mastergerät 200 ausgeführt werden und umfasst gemäß Ausführungsvarianten der Erfindung ein Bereitstellen 201 von Daten 500 zur Verarbeitung durch sämtliche der Geräte 300 in der Kette, ein Bereitstellen 202 wenigstens eines ersten Datenelements 530 der Datenelemente 520 an einer vorgegebenen Position im Datenblock 510, ein Bereitstellen 203 wenigstens eines weiteren Datenelements 520 sequentiell nach dem wenigstens einen ersten Datenelement 530, und ein Initiieren 204 einer Weiterleitung der Daten 500, bei welcher die Daten 500 über den gemeinsamen Anschluss 210 des Mastergeräts 200 zur Verarbeitung durch jedes Gerät 300 in der Kette ausgegeben werden.

Ein Mastergerät 200 kann dabei zur Erweiterung einer auf einer Punkt-zu-Punkt Kommunikation basierenden Kommunikationstechnologie zum Betreiben einer Kette von sekundären Geräten 300 an einem gemeinsamen Anschluss 210 des Mastergeräts 200 ausgeführt sein. Das sekundäre Gerät 300 kann einen Datenanschluss DP zum Empfang von Daten 500 zur Verarbeitung durch das sekundäre Gerät 301 aufweisen. Ferner kann ein Datenspeicher 330 zum Bereitstellen 102 wenigstens eines Datenelements 530 der Datenelemente 520 vorgesehen sein. Auch kann das sekundäre Gerät 300 ein Mittel 320 wie ein Computerprogramm oder Teil eines Computerprogrammes oder ein Prozessor zum Durchführen 103 der Verarbeitung der Daten 500 aufweisen. Zusätzlich kann ein Erweiterungsanschluss EP für die Weiterleitung durch ein Ausgeben 104 der Daten 500 über den Erweiterungsanschluss EP an ein nachfolgendes Gerät 300 bereitgestellt sein.

Das Kommunikationssystem 50 ist mit weiteren Einzelheiten in Fig. 2 dargestellt. Es kann neben dem Mastergerät 200 sowie mindestens zwei sekundären Geräten 300 auch eine zentrale Steuerungsvorrichtung 55 aufweisen, die über einen Feldbus 56 mit dem Mastergerät 200 verbunden ist. Das Kommunikationssystem 50 kann als Kommunikationstechnologie zur Verbindung der sekundären Geräte 300 ein auf eine Punkt-zu-Punkt Kommunikation basierende Kommunikationstechnologie wie IO-Link aufweisen.

IO-Link ist eine standardisierte Kommunikationsschnittstelle für die Sensor-/Aktor-Ebene, die eine Punkt-zu-Punkt-Verbindung zwischen einem IO-Link Master 200 und einem IO-Link Device 300 ermöglicht. Die sekundäre Geräte 300 und ggf. auch die IO-Link Devices werden im Rahmen der Erfindung auch nur kurz als Geräte bezeichnet.

Nachfolgend wird eine beispielhafte Ausführungsvariante der Erfindung näher beschrieben. Jedes der beschriebenen Merkmale ist dabei beispielhaft und steht somit nicht im zwingenden Verhältnis mit den weiteren beschriebenen Merkmalen, die somit jeweils auch isoliert beansprucht werden können.

Der IO-Link Master 200 ist dabei das zentrale Steuergerät, das die Kommunikation mit den angeschlossenen IO-Link Devices verwaltet. Der IO-Link Master kann über einen Feldbus 56 mit einer SPS 55 verbunden sein.

Das IO-Link Device 300 ist z. B. ein Sensor, ein Aktor oder ein anderes Gerät, das über IO-Link kommuniziert. Beispiele sind Drucksensoren, Temperatursensoren oder Ventile.

Die Verbindung zwischen dem IO-Link Master und dem IO-Link Device kann z. B. über ein Standard-3-Leiter-Kabel erfolgen. Das Kabel überträgt ggf. sowohl die Energieversorgung als auch die Kommunikationssignale.

Der IO-Link Master sendet und empfängt digitale Daten von und zu den angeschlossenen IO-Link Devices. Die Kommunikation erfolgt zyklisch und azyklisch. Zyklische Daten sind in der Regel Prozessdaten wie Messwerte, während azyklische Daten Konfigurations- oder Diagnoseinformationen umfassen.

Jedes IO-Link Device hat eine sogenannte IODD (IO Device Description), die die spezifischen Merkmale und Kommunikationsparameter des Geräts beschreibt. Diese IODD-Datei wird in den IO-Link Master geladen, um die Kommunikation zu konfigurieren und zu überwachen.

Eine Kaskadierung von IO-Link-Devices ist herkömmlicherweise nicht vorgesehen. IO-Link ist eine Punkt-zu-Punkt-Kommunikationstechnologie, was bedeutet, dass jedes IO-Link-Device direkt mit einem IO-Link Master verbunden ist.

Gemäß Ausführungsvarianten der Erfindung ist allerdings eine geräteunabhängige Erweiterung vorgesehen, bei welcher eine Kaskade von mehreren IO-Link Devices möglich sein kann. Ausführungsbeispiele der Erfindung haben daher den Vorteil, dass keine aufwendige und spezifische Konfiguration an die zu erweiternden Geräte notwendig ist und die Erweiterung nicht auf ein einziges Gerät beschränkt ist.

Ein in Fig. 2 dargestelltes erstes IO-Link-Device 301 kann z. B. über einen Port DP (Device Port) mit dem Master Modul (MM) verbunden werden. Ferner kann das erste IO-Link-Device einen Extension Port (EP) aufweisen. An das erste IO-Link-Device kann ein weiteres, zweites IO-Link-Device angeschlossen werden. Hierzu wird der Port DP des zweiten IO-Link-Devices mit dem Port EP des ersten IO-Link-Devices verbunden. In gleicher Weise können weitere IO-Link-Devices kaskadierend miteinander in einer Daisy-Chain-Konfiguration miteinander verbunden werden.

Zur Kommunikation des Masters 200 mit den IO-Link Geräten 300 werden Prozessdaten verwendet, die in PDO (Process Data Output) und PDI (Process Data Input) unterteilt sein können (s. Fig. 2). PDOs enthalten die ausgehenden Steuerbefehle oder Sollwerte, die vom IO-Link Master an die angeschlossenen Devices gesendet werden. PDIs hingegen umfassen die eingehenden Sensordaten oder Rückmeldungen, die von den IO-Link Devices zum IO-Link Master übertragen werden. Darüber hinaus können IO-Link Devices auch azyklische Datenübertragungen über ISDU (Indexed Service Data Unit) nutzen, um Konfigurations-, Diagnose- oder Kalibrierungsdaten auszutauschen. Das nachfolgend beschriebene Prinzip kann daher sowohl auf die Prozessdaten PDO und PDI als auch für andere Datenstrukturen wie ISDU verwendet werden.

Bei der geräteunabhängigen Erweiterung gemäß Ausführungsvarianten der Erfindung ist die Anzahl der erweiterbaren IO-Link Geräte nicht auf 1 begrenzt, sondern durch die Prozessdatenlänge von 32 Byte IN/OUT.

Ein Bespiel ist die Verwendung von Segmentleuchten als IO-Link-Devices 300. Dabei können zum Beispiel 8 Byte für eine 5 Segmentleuchte festgelegt werden. Das bedeutet, man kann in diesem Fall 4x5er Segmentleuchten kaskadieren oder 2x 10er oder die Kombination 2x5er mit einer 10er usw.

Das Verfahren ist nicht auf Segmentleuchten beschränkt. Würden IO-Module (Hubs) oder andere IO-Link Devices verwendet werden, so können die 8 Bytes weiterhin genutzt werden, um die verschiedenen Geräte untereinander kombinieren.

Die Geräte haben dann z. B. eine Stand Alone und 3 Daisy Chain IDs, die die Datenlänge festlegen (Im IO-Link darf eine Device ID nur eine Datenlänge haben).

In den Fig. 2 bis 4 ist die Funktionsweise veranschaulicht. Jedes Gerät empfängt oder sendet 8 Bytes in Summe, verwendet aber nur die für ihn benötigende Daten bzw. gibt diese wieder zurück.

Ausführungsbeispiele der Erfindung betreffen ein Kommunikationssystem zur Kaskadierung und insbesondere Daisy-Chain Verknüpfung mehrerer Geräte 300 (auch Chain Devices oder kurz CDs). Dabei kann eine feste Größe für die Prozessdatenübertragung spezifiziert sein (z. B. PDOut: 32 Byte und PDIn: 2 Byte).

Ferner kann als Rahmentyp/M-Sequenz Typ TYP_2_V festgelegt werden, der eine flexible Anordnung der Geräte ermöglicht.

Jedes sekundäre Gerät 300 kann an beliebiger Stelle in der Kette eingesetzt werden und seine Funktion unabhängig von seiner Position erfüllen. Der Master, insbesondere Main Master oder kurz MM, kommuniziert ausschließlich mit dem ersten Gerät 301, insbesondere Chain Device bzw. CD1, das bspw. ein einzelnes Device mit einer größeren Anzahl von Segmenten emuliert.

Das System kann ferner eine Hot-Plugging-Funktionalität aufweisen. Die Hot-Plugging Funktionalität wird bspw. durch die Überprüfung des "Port Status" am Erweiterungsport jedes CD gewährleistet. Jeder CD implementiert vorzugsweise die IO-Link Funktionalität am Device Port (DP) zur Kommunikation mit dem MM. Die Verwendung eines zusätzlichen Protokolls am Erweiterungsport (EP) ist möglich, kann aber entfallen, um Komplexität zu vermeiden.

Die Datenstruktur und -organisation innerhalb der CDs sind vorzugsweise unabhängig von ihrer Position in der Kette identisch. Das Mastergerät 200 und/oder das erste Gerät 301 in der Kette fungiert bspw. als zentrale Steuerungseinheit und leitet alle Informationen an die nachfolgenden Geräte weiter.

Durch regelmäßige Überprüfungen des Port Status am EP können Chain Devices das Anbringen neuer Geräte erkennen und sich entsprechend anpassen. Die Unterscheidung von IO-Link Geräten gleicher Typen erfolgt durch bspw. Vendor IDs (VID) und Device IDs (DID).

Ein Vorteil von Ausführungsvarianten der Erfindung ist insbesondere, dass ein CD seine Position in der Kette nicht "kennt". Dies bedeutet, dass der auf jeden CD angewandte Datensatz identisch sein kann, die Struktur der Prozessdaten für jede CD identisch sein kann, der Ort der Prozessdaten und der Variablen für lokale Merkmale immer an der gleichen Stelle zu finden sein kann und der Inhalt der Prozessdaten und Variablen für lokale Merkmale für jede CD anpassbar sein kann.

Um die oben genannten Anforderungen zu erfüllen, kann eine Verschiebung - insbesondere in der Form einer Rotation - der Prozessdaten vorgesehen sein. Dies bedeutet, die Position der Prozessdaten für jede Weiterleitung an ein empfangenes CD innerhalb der Kette so angepasst werden kann, dass das empfangene CD die für ihn relevante Daten immer an der gleichen Stelle findet. Eine Möglichkeit zu Realisierung ist die Rotation der Positionen bei jeder Weiterleitung.

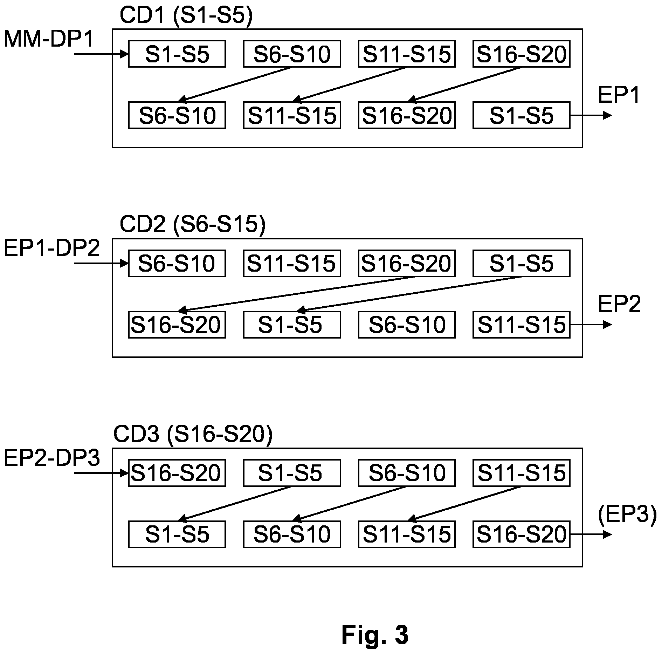

Fig. 3 zeigt ein Beispiel, wie Array-Elemente zur Steuerung von LED-Segmenten (S1 bis S20) verwendet werden. Die Elemente sind in Gruppen von fünf oder zehn Segmenten gruppiert. Sie werden vom Hauptmaster "MM" an das Chain Device #1 gesendet. CD1 ist bspw. ein 5-Segment-Modul und verwendet daher die Steuerinformationen für die ersten fünf Segmente S1 bis S5. Die Steuerinformationen, die von CD1 an CD2 weitergeleitet werden, werden um die Anzahl der zusammengefassten Steuersegment-Array-Elemente nach links rotiert. Nach der Rotation erhält CD2 die Steuerinformation S6 an der ersten Position in seinen Steuerdaten. CD2 ist ein 10-Segment-Gerät und verwendet daher die Steuerdaten für die Segmente S6 bis S15, die sich nun an den ersten zehn Positionen im Steuer-Array befinden.

Die zehn von CD2 verwendeten Segmente werden nach links rotiert, bevor erneut alle Array-Elemente an CD3 weitergeleitet werden, jetzt mit S16 an der ersten Position. CD3 verwendet die ersten fünf Array-Elemente und rotiert sie nach links, als ob sie an ein (in diesem Beispiel nicht vorhandenes) nachfolgendes CD4 weitergeleitet werden sollen. Die Rotation von Datenelementen kann sowohl für ISDU-Parameter als auch für Prozessdaten verwendet werden.

Die Rotation der Array-Elemente ermöglicht den Anschluss weiterer Chain Devices. Wenn ein weiteres CD4 an EP3 angeschlossen wird, erhält es die gleichen Segmentinformationen, die an das CD1 gesendet wurden. Die Konfigurationsmerkmale zusätzlicher Segmente werden in diesem Fall modulo 20 definiert.

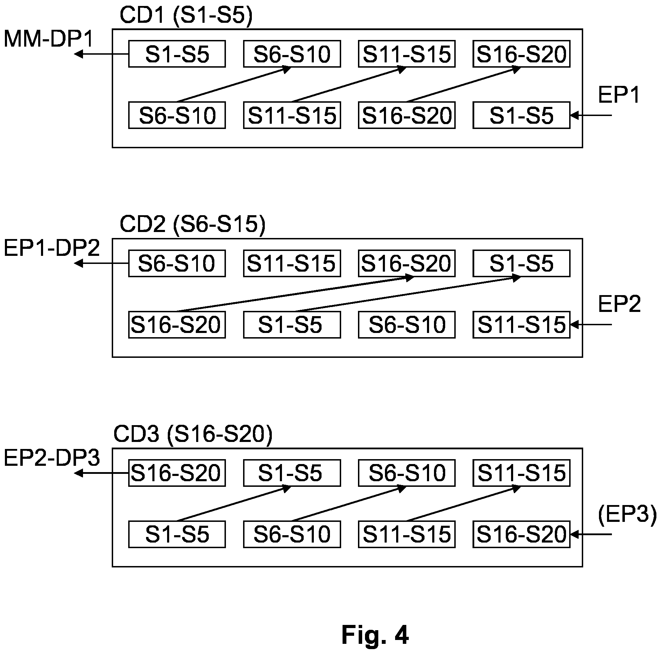

Für eingehende Statusinformationen sollte die Drehung in umgekehrter Richtung (von links nach rechts) erfolgen, wie in Fig. 4 dargestellt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Datenverarbeitungsvorrichtung

- 50: Kommunikationssystem
- 55: Steuerungsvorrichtung, SPS
- 56: Feldbus

- 60: Computerprogramm

- 100: Verfahren

- 200: Verfahren
- 210: Anschluss

- 300: sekundäres Gerät, Geräte
- 301: erstes Gerät

- 320: Mittel
- 330: Datenspeicher
- 400: Verbindungsstück, T-Stück
- 500: Daten
- 510: Datenblock

- 520: Datenelemente
- 530: zugeordnete Datenelement

- DP: Datenanschluss
- EP: Erweiterungsanschluss

## Patentansprüche

1. Verfahren (100) zur Erweiterung einer auf einer Punkt-zu-Punkt Kommunikation basierenden Kommunikationstechnologie zum Betreiben einer Kette von sekundären Geräten (300) an einem gemeinsamen Anschluss (210) eines Mastergeräts (200), wobei vorzugsweise die sekundären Geräte (300) als IO-Link Devices, das Mastergerät (200) als IO-Link Master und/oder die Kommunikationstechnologie als IO-Link ausgeführt ist, insbesondere für eine industrielle Anlage, wobei das Verfahren (100) umfasst:
- Bereitstellen (101) von Daten (500) zur Verarbeitung durch ein aktuell ausführendes Gerät (301) in der Kette, wobei ein Datenblock (510) der Daten (500) mehrere Datenelemente (520) umfasst, die den verschiedenen Geräten (300) in der Kette zugeordnet sind,
- Bereitstellen (102) wenigstens eines Datenelements (530) der Datenelemente (520), welches an einer vorgegebenen Position im Datenblock (510) vorgesehen ist, und daher dem aktuell ausführenden Gerät (301) in der Kette zugeordnet wird,
- Durchführen (103) der Verarbeitung der Daten (500), wobei eine Verschiebung, insbesondere Rotation, der Datenelemente (520) um eine spezifizierte Anzahl von Positionen durchgeführt wird, damit nach jeder Weiterleitung der Daten (500) an eines der Geräte (300) in der Kette diesem Gerät (300) das ihm zugeordnete wenigstens eine Datenelement (530) an der gleichen vorgegebenen Position bereitgestellt wird,
- Initiieren (104) der Weiterleitung der Daten (500) an das dem aktuell ausführenden Gerät (301) nachfolgende Gerät (300).

2. Verfahren (100) nach Anspruch 1,
**dadurch gekennzeichnet,**
**dass** die Verschiebung, insbesondere Rotation, zur einheitlichen Durchführung durch jedes der Geräte (300), vorzugsweise mit einer variablen und für die Geräte (300) spezifizierbaren Anzahl der Positionen, vorgesehen ist, um zu ermöglichen, dass die Verschiebung, insbesondere Rotation, der Datenelemente (520) von jedem der Geräte (300) in der Kette durchgeführt werden kann, bevor das Gerät (300) die Weiterleitung initiiert, um zu gewährleisten, dass das jeweils aktuell ausführende Gerät (300), welches aktuell die Verarbeitung der Daten (500) ausführt, das ihm zugeordnete wenigstens eine Datenelement (530) stets an der gleichen vorgegebenen Position abrufen kann, wobei die für die Verschiebung vorgesehene Anzahl der Positionen spezifiziert sind in Abhängigkeit von der Anzahl der Datenelemente, die dem jeweiligen aktuell ausführenden Gerät (300) zugeordnet sind und durch das Gerät (300) verarbeitet werden, wobei vorzugsweise das Verfahren (100) zur wiederholten Ausführung vorgesehen ist, und zwar nacheinander von den verschiedenen Geräten (300) in der Kette.

3. Verfahren (100) nach einem der vorhergehenden Ansprüche,
**dadurch gekennzeichnet,**
**dass** die Durchführung der Verarbeitung der Daten (500) unterschiedliche Typen von Verarbeitungsvorgängen, vorzugsweise einen Empfangs- und Sendevorgang, bevorzugt Lese- und Schreibvorgang, am wenigstens einen zugeordneten Datenelement (520) umfasst, und ferner umfasst:
- Durchführen der Verschiebung, insbesondere Rotation, der Datenelemente (520) in eine Richtung, die abhängig von dem Typ des aktuellen Verarbeitungsvorgangs ist, vorzugsweise in eine erste Richtung, wenn es sich um einen Empfangs- oder Lesevorgang handelt, und in eine zur ersten Richtung entgegengesetzte Richtung, wenn es sich um einen Sende- oder Schreibvorgang handelt,
wobei besonders bevorzugt die Richtungen links- und rechtsseitig und/oder die Verschiebung zyklisch ist.

4. Verfahren (100) nach einem der vorhergehenden Ansprüche,
**dadurch gekennzeichnet,**
**dass** der Datenblock (510) ein Array (510) mit den mehreren Datenelementen (520) als Arrayelemente (520) bildet, wobei das Bereitstellen (102) des wenigstens einen zugeordneten Datenelements (530) für jedes der Geräte (300) an der gleichen vorgegebenen Position im Array (510) erfolgt, sodass die Geräte (300) den Abruf ihres wenigstens einen zugeordneten Datenelements unabhängig von ihrer Position in der Kette vornehmen können und/oder agnostisch hinsichtlich ihrer Position in der Kette sind.

5. Verfahren (100) nach einem der vorhergehenden Ansprüche,
**dadurch gekennzeichnet,**
**dass** jedes der Geräte (300) eine Konfiguration aufweist, welche die Anzahl der Datenelemente (530) bestimmt, welche dem Gerät (300) zugeordnet sind und verarbeitet werden,
wobei die Anzahl der zugeordneten Datenelemente (520) abhängig ist von der Anzahl der Steuerungsfunktionen und/oder Erfassungsfunktionen, die das Gerät (300) bereitstellt, und welche durch die zugeordneten Datenelemente (520) konfiguriert und/oder eingestellt und/oder angesteuert und/oder ausgelesen werden, vorzugsweise über das Mastergerät (200) und bevorzugt über eine zentrale oder dezentrale Steuerung einer industriellen Anlage,
wobei jedes der Geräte (300) eine Funktion zur Spezifikation der Anzahl der Positionen aufweist, um die Verschiebung, insbesondere Rotation, um diejenige Anzahl von Positionen durchzuführen, welche der Anzahl der zugeordneten und verarbeiteten Datenelemente (530) entspricht.

6. Verfahren (100) nach einem der vorhergehenden Ansprüche,
**dadurch gekennzeichnet,**
**dass** die Geräte (300) in der Kette zumindest eines der folgenden umfassen:
- Ein Gerät zur Bereitstellung von wenigstens einer Steuerungsfunktion, vorzugsweise zur Ansteuerung von wenigstens einem Motor und/oder wenigstens einer Leuchte und/oder von Segmentleuchten,
- Ein Gerät (300) zur Bereitstellung von wenigstens einer Erfassungsfunktion, vorzugsweise zur Auswertung eines Sensors und/oder einer Lichtschranke und/oder eines Schalters,
- Ein Gerät (300) zur Bereitstellung von Steuerungsfunktionen in der Form von Energiemanagementfunktionen, vorzugsweise zur Überwachung und Optimierung des Energieverbrauchs und/oder zur Steuerung von Energieeinsparmaßnahmen und/oder zur Integration in ein Energiemanagementsystem,
- Ein Gerät (300) zur Bereitstellung von Steuerungsfunktionen in der Form von Temperaturregelungsfunktionen, vorzugsweise zur Erfassung und Regelung der Temperatur in industriellen Prozessen und/oder zur Überwachung von Temperaturgrenzwerten und/oder zur Steuerung von Heizelementen,
- Ein Gerät (300) zur Bereitstellung von Steuerungsfunktionen in der Form von Positionier- und Bewegungserfassungsfunktionen, vorzugsweise zur Positionierung von Maschinenkomponenten und/oder zur Überwachung von Bewegungsabläufen und/oder zur Integration in ein Automatisierungssystem,
- Ein Gerät (300) zur Bereitstellung von Erfassungsfunktionen in der Form von Kommunikationsfunktionen, vorzugsweise zur Anbindung und Integration von Feldgeräten in ein übergeordnetes Steuerungssystem und/oder zur Datenübertragung zwischen Maschinenkomponenten,
- Ein Gerät (300) zur Bereitstellung von Erfassungsfunktionen in der Form von Diagnose- und Wartungsfunktionen, vorzugsweise zur Überwachung und Analyse des Gerätezustands und/oder zur Früherkennung von Fehlfunktionen und/oder zur Unterstützung bei der vorausschauenden Wartung,
- Ein Gerät (300) zur Bereitstellung von Erfassungsfunktionen in der Form von Sicherheitsfunktionen, vorzugsweise zur Überwachung und Kontrolle von Sicherheitszonen und/oder zur Auslösung von Sicherheitsmaßnahmen,
- Ein Gerät (300) zur Bereitstellung von Erfassungsfunktionen in der Form von optischen Erkennungsfunktionen, vorzugsweise zur Erfassung und Auswertung von Bilddaten und/oder zur Unterstützung von Qualitätskontrollprozessen und/oder zur Identifikation von Objekten und deren Merkmalen.

7. Verfahren (100) nach einem der vorhergehenden Ansprüche,
**dadurch gekennzeichnet,**
**dass** die Geräte (300) der Kette in einer Daisy Chain Konfiguration miteinander kabelgebunden zum Datenaustausch und vorzugsweise Energieaustausch verbunden sind, wobei bevorzugt eine Energieeinspeisung für die Geräte (300) durchgeführt wird, besonders bevorzugt dadurch, dass wenigstens ein Verbindungsstück (400), insbesondere T-Stück, zur Energieeinspeisung mit wenigstens einem der Geräte (300) verbunden ist, welche zusätzlich zur Energieversorgung durch das Mastergerät (200) vorgesehen ist.

8. Verfahren (100) nach einem der vorhergehenden Ansprüche,
**dadurch gekennzeichnet,**
**dass** die Daten (500) eine erste Datenart umfassen, bei welcher die Datenelemente (520) als Steuerungs-, Konfigurations-, Diagnose- und/oder Kalibrierungsdaten vorgesehen sind, und eine zweite Datenart umfassen, bei welcher die Datenelemente (520) als Prozessdaten ausgeführt sind.

9. Verfahren (200`) zur Erweiterung einer auf einer Punkt-zu-Punkt Kommunikation basierenden Kommunikationstechnologie zum Betreiben von mindestens zwei über eine kabelgebundene Verbindung miteinander verkettete sekundäre Geräte (300) an einem gemeinsamen Anschluss (210) eines Mastergeräts (200), wobei vorzugsweise die sekundären Geräte (300) als IO-Link Devices, das Mastergerät (200) als IO-Link Master und/oder die Kommunikationstechnologie als IO-Link ausgeführt ist, umfassend die folgenden Schritte, welche durch das Mastergerät (200) ausgeführt werden:
- Bereitstellen (201) von Daten (500) zur Verarbeitung durch sämtliche der Geräte (300) in der Kette, wobei ein Datenblock (510) der Daten (500) zur Aufnahme und Kombination mehrerer Datenelemente (520) ausgeführt ist, die den verschiedenen Geräten (300) in der Kette zugeordnet werden,
- Bereitstellen (202) wenigstens eines ersten Datenelements (530) der Datenelemente (520) an einer vorgegebenen Position im Datenblock (510), um dieses einem ersten Gerät (301) in der Kette zuzuordnen,
- Bereitstellen (203) wenigstens eines weiteren Datenelements (520) sequentiell nach dem wenigstens einen ersten Datenelement (530), um das wenigstens eine weitere Datenelement (520) wenigstens einem weiteren Gerät (300) in der Kette zuzuordnen,
- Initiieren (204) einer Weiterleitung der Daten (500), bei welcher die Daten (500) über den gemeinsamen Anschluss (210) des Mastergeräts (200) zur Verarbeitung durch jedes Gerät (300) in der Kette ausgegeben werden.

10. Mastergerät (200) zur Erweiterung einer auf einer Punkt-zu-Punkt Kommunikation basierenden Kommunikationstechnologie zum Betreiben einer Kette von sekundären Geräten (300) an einem gemeinsamen Anschluss (210) des Mastergeräts (200), aufweisend eine Vorrichtung zur Datenverarbeitung, welche dazu ausgeführt ist, das Verfahren nach Anspruch 9 auszuführen.

11. Sekundäres Gerät (300) zur Verkettung mit wenigstens einem weiteren sekundären Gerät (300) in einem auf einer Punkt-zu-Punkt Kommunikation basierenden Kommunikationssystem (50), aufweisend:
- einen Datenanschluss (DP) zum Empfang von Daten (500) zur Verarbeitung durch das sekundäre Gerät (301), wobei ein Datenblock (510) der Daten (500) mehrere Datenelemente (520) umfasst, die den Geräten (300) in der Kette zugeordnet sind,
- einen Datenspeicher (330) zum Bereitstellen (102) wenigstens eines Datenelements (530) der Datenelemente (520), welches an einer vorgegebenen Position im Datenblock (510) vorgesehen ist, und daher dem sekundären Gerät (301) zugeordnet wird,
- ein Mittel (320) zum Durchführen (103) der Verarbeitung der Daten (500), wobei eine Verschiebung, insbesondere Rotation, der Datenelemente (520) um eine spezifizierte Anzahl von Positionen durchgeführt wird, damit nach jeder Weiterleitung der Daten (500) an eines der Geräte (300) in der Kette diesem Gerät (300) das ihm zugeordnete wenigstens eine Datenelement (520) ebenfalls an der gleichen vorgegebenen Position bereitgestellt wird,
- einen Erweiterungsanschluss (EP) für die Weiterleitung durch ein Ausgeben (104) der Daten (500) über den Erweiterungsanschluss (EP) an ein nachfolgendes Gerät (300).

12. Sekundäres Gerät (300) nach Anspruch 11,
**dadurch gekennzeichnet,**
**dass** das sekundäre Gerät (300) eine Vorrichtung (10) zur Datenverarbeitung aufweist, die ausgeführt ist, das Verfahren nach einem der Ansprüche 1 bis 8 auszuführen.

13. Kommunikationssystem (50), aufweisend ein Mastergerät (200) nach Anspruch 10 sowie mindestens zwei sekundäre Geräte (300) nach Anspruch 11 oder 12, wobei die sekundären Geräte (300) miteinander kabelgebunden verkettet sind, und wobei lediglich eines der sekundären Geräte (300) über einen gemeinsamen Anschluss (210) des Mastergeräts (200) die Kette mit dem Mastergerät (200) verbindet.

14. Computerprogramm (60), umfassend Befehle, die bei der Ausführung des Computerprogramms (60) durch einen Computer (10) diesen veranlassen, das Verfahren nach einem der Ansprüche 1 bis 9 auszuführen.

15. Vorrichtung (10) zur Datenverarbeitung, die ausgeführt ist, das Verfahren nach einem der Ansprüche 1 bis 9 auszuführen.
